# FASCICULE DE BREVET EUROPEEN

(11) **EP 1 174 650 B1**
(45) Date de publication et mention de la délivrance du brevet: **07.09.2005**
(21) Numéro de dépôt: 01401866.7
(22) Date de dépôt: 12.07.2001
(51) Int. Cl.: F16K 17/19

(54) **Soupape de sécurité pour une cuve destinée à contenir un fluide chimique ou alimentaire**
Sicherheitsventil für einen in der Chemischen-/ Nahrungsmittelindustrie genutzten Behälter
Safety valve for a container intended to contain a chemical or alimentary fluid

(30) Priorité: 21.07.2000 FR 0009579
(43) Date de publication de la demande: 23.01.2002
(73) Titulaire: Societe Nouvelle Servinox, 78190 Trappes (FR)
(72) Inventeur: Brouillard, Alain, 78000 Versailles (FR)
(74) Mandataire: Kohn, Philippe

(56) Documents cités:
- WO-A-97/48926
- US-A- 2 732 856
- US-A- 4 257 445
- US-A- 4 259 984
- US-A- 5 048 560

## Description

La présente invention concerne une soupape de sécurité à clapet de dépression, notamment pour une cuve étanche à usage alimentaire. L'invention concerne également une soupape de sécurité combinée à clapets de dépression et de surpression.

L'invention concerne plus particulièrement une soupape de sécurité pour une cuve destinée à contenir un fluide chimique ou alimentaire afin notamment de réaliser un dispositif de protection automatique au vide en cas de vidange d'une cuve étanche, éventuellement en combinaison avec un dispositif de protection automatique à la surpression lors du remplissage de la cuve.

Un tel type de soupape est un ensemble généralement en acier inoxydable, du type comportant un corps de soupape comportant une paroi latérale en forme de jupe globalement cylindrique d'axe vertical qui est fermée à sa partie supérieure et à la partie inférieure de laquelle est agencée une plaque annulaire horizontale inférieure trouée centralement et qui s'étend radialement vers l'intérieur du corps de soupape et dont la face supérieure délimite un siège annulaire de clapet avec lequel coopère la face annulaire inférieure en vis-à-vis d'un corps mobile de clapet, en forme générale de plaque de fermeture du trou central, qui repose par gravité sur le siège de clapet et qui est susceptible de se soulever automatiquement lorsque la pression à l'intérieur du corps de soupape est inférieure à une valeur déterminée pour constituer un clapet de dépression.

La soupape, qu'il s'agisse d'une simple soupape à dépression ou d'une soupape "pression/dépression", est fermée à sa partie supérieure par une paroi supérieure et l'ensemble de la soupape doit être parfaitement étanche.

Toutefois, afin de permettre les opérations de nettoyage et de rinçage des installations comportant une telle soupape et de la soupape elle-même, elle doit présenter des caractéristiques de conception facilitant son nettoyage, c'est à dire qu'elle doit en principe ne comporter aucune zone susceptible de retenir des liquides pollués qui constituent des zones de contamination potentielle, et elle doit faciliter le drainage des liquides hors de la soupape.

La conception du clapet de dépression évoquée ci-dessus dans laquelle le corps de clapet se soulève en cas de dépression, c'est-à-dire un clapet dit "montant", est avantageuse, par rapport à un clapet de dépression du type "descendant" à l'ouverture, car, en position haute ouverte du clapet, il n'y a pas de cuvette susceptible de retenir les liquides nécessitant l'emploi de systèmes mécaniques d'ouverture forcée commandée.

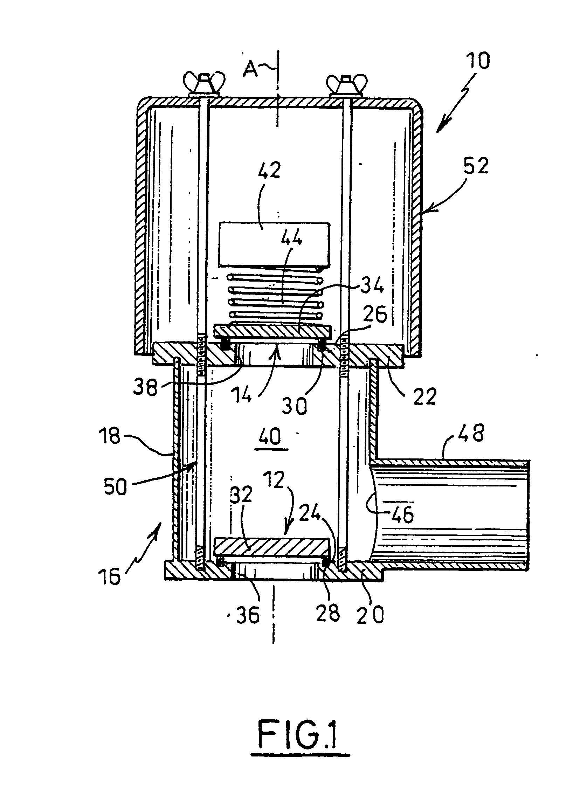

Selon une conception connue de l'art antérieur, et par exemple la soupape commercialisée sous la marque "BOG" par le titulaire de la présente demande et schématisée à la figure 1, le corps de la soupape comporte une virole tubulaire d'axe vertical constituant ladite paroi latérale et une bride annulaire inférieure en forme de plaque annulaire constituant le siège du clapet inférieur de dépression. La bride inférieure est un élément inférieur rapporté et démontable de façon à permettre l'assemblage de la soupape, et notamment la mise en place du corps de clapet à l'intérieur du corps de soupape, le corps de clapet et le trou central de la bride étant traditionnellement de contour périphérique circulaire.

Cette soupape comporte des éléments supplémentaires d'assemblage et de fixation comportant notamment des tirants et/ou des ensembles vissés agencés à l'intérieur de la soupape, c'est à dire tout un ensemble de composants constituant autant de zones supplémentaires de contamination.

Lorsque la soupape est du type à pression/dépression, le clapet supérieur taré de surpression est extérieur à la soupape et il comporte lui aussi une bride supérieure annulaire formant siège de soupape fixée par des tirants qui peuvent être les mêmes que ceux pour le serrage de la bride inférieure et qui peuvent aussi participer au guidage du corps de clapet de surpression.

L'invention vise ainsi à proposer une soupape du type mentionné précédemment qui remédie aux inconvénients qui viennent d'être évoqués.

Dans ce but, l'invention propose une soupape caractérisée en ce que la plaque annulaire forme un ensemble monobloc, indémontable, avec la jupe latérale du corps de soupape, et en ce que le trou central de la plaque annulaire et le corps de clapet sont de forme générale ovale ou elliptique afin de permettre l'introduction du corps de clapet de bas en haut à travers le trou central en vue de sa mise en place lors de l'assemblage de la soupape.

Ainsi, il est possible de réaliser le corps de soupape sous la forme d'une pièce chaudronnée monobloc.

Le corps de la soupape, dans sa zone interne "sensible" aux pollutions, ne comporte alors aucun système de fixation ou de montage du type à vis, ni aucun joint, en dehors du ou des joints de clapet de dépression et/ou de surpression

Tous les systèmes de fixation sont à l'extérieur du corps de soupape et ils ne peuvent pas polluer la cuve qui est équipée de la soupape.

La conception selon l'invention permet aussi de réaliser un corps de soupape dont les formes internes sont intégralement drainables et vidangeables lors des opérations d'entretien.

Le corps de soupape ne comporte aucun joint, c'est à dire notamment aucune gorge recevant un joint d'étanchéité qui est toujours une source de contamination, les seuls joints d'étanchéité de la soupape étant ceux portés par les corps de clapets.

Selon d'autres caractéristiques de l'invention :
- la plaque annulaire formant siège de clapet est soudée au bord d'extrémité inférieure de la jupe annulaire du corps de soupape ;
- la face supérieure de la plaque annulaire formant siège de clapet est une surface lisse sur laquelle vient porter un joint périphérique d'étanchéité porté par le corps de clapet ;
- le corps de clapet comporte une gorge périphérique qui est ouverte radialement vers l'extérieur et verticalement vers le bas et qui reçoit le joint périphérique d'étanchéité ;
- la face inférieure du corps de clapet comporte une zone périphérique annulaire inférieure d'appui du corps de clapet sur le siège, et le joint d'étanchéité comporte une lèvre inférieure d'étanchéité qui porte sur le siège de clapet lorsque ladite zone est en appui, un tel joint à lèvre souple assurant une étanchéité parfaite sans qu'il soit nécessaire d'alourdir excessivement le corps de clapet dont la masse détermine le tarage à l'ouverture de la soupape ;
- le clapet comporte une tige centrale et axiale de guidage des déplacements verticaux du corps de clapet par rapport au siège de clapet, qui s'étend verticalement vers le bas et qui est reçue en coulissement axial dans une bague de guidage portée par la plaque annulaire formant siège de clapet ;
- la soupape comporte un bras inférieur transversal de guidage du corps de clapet qui s'étend diamétralement et dont les deux extrémités opposées s'étendent chacune en regard d'une partie en vis-à-vis de la face inférieure de la plaque annulaire formant siège de clapet à laquelle elle est fixée, et le tronçon central du bras de guidage constitue la bague de guidage ;
- il est prévu des moyens d'indexation angulaire du corps de clapet par rapport au siège de clapet ;
- la tige de guidage est solidaire en rotation du corps de clapet, et il est prévu des moyens d'indexation angulaire de la tige de guidage par rapport à la bague de guidage ;
- la face supérieure du corps de clapet est une surface plane lisse ;
- la partie supérieure du corps de soupape est fermée par une paroi supérieure réalisée en une seule pièce avec la jupe latérale ;
- afin de réaliser une soupape combinée dépression/surpression, la paroi supérieure comporte un trou central reliant le corps de soupape à un clapet taré de surpression rapporté à la partie supérieure de la soupape et agencé à l'extérieur du corps de soupape ;
- le clapet supérieur de surpression comporte alors une plaque annulaire délimitant un siège de soupape et qui est fixée à la paroi supérieure du corps de soupape par soudage, afin de conserver au corps de soupape sa conception monobloc ;
- la soupape comporte un organe de lavage et de rinçage de la soupape qui comprend notamment une buse de projection de liquide de lavage et du rinçage qui est agencée centralement à l'intérieur du corps de soupape ;
- le corps de soupape est une pièce de chaudronnerie, notamment en acier inoxydable.

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique en coupe axiale qui illustre une soupape de dépression/surpression selon l'état de la technique ;
- la figure 2 est une vue en section axiale qui illustre un exemple de réalisation d'une soupape à dépression/surpression conforme aux enseignements de l'invention ;
- la figure 3 est une vue en perspective éclatée à plus grande échelle des principaux composants de la partie inférieure de la soupape de la figure 2, et notamment du clapet de dépression ;
- la figure 4 est une vue en section axiale à plus grande échelle qui illustre des détails de réalisation de la figure 2 ;
- la figure 5 est une vue de dessous du clapet de dépression de la soupape représentée aux figures 2 et 3 sans la cuvette de récupération des écoulements.

Dans la description qui va suivre, des composants identiques, analogues ou similaires seront désignés par les mêmes chiffres de référence.

Afin de faciliter la compréhension de la description et des revendications, on adoptera une orientation verticale et on utilisera les termes supérieur et inférieur notamment en référence aux figures 1 à 3.

On a représenté à la figure 1, une soupape 10 selon l'état de la technique qui est une soupape du type à dépression/surpression d'axe vertical A qui comporte un clapet inférieur de dépression 12 et un clapet supérieur de surpression 14 qui sont agencés respectivement à la partie inférieure et à la partie supérieure d'un corps de soupape 16.

Selon cette conception connue, le corps de soupape 16 est constitué pour l'essentiel par une paroi latérale cylindrique 18 d'axe vertical A et par deux brides annulaires inférieure 20 et supérieure 22.

Chacune des deux brides en forme de plaque annulaire 20, 22 est une pièce formant siège de clapet, respectivement inférieur et supérieur.

Selon cette conception, la face annulaire horizontale supérieure 24, 26 de la bride inférieure 20 et respectivement supérieure 22 constitue un siège de clapet comportant ici un joint d'étanchéité ou joint de clapet 28, 30 respectivement qui est monté dans une gorge de la face supérieure 24, 26 et avec lequel coopère un corps de clapet inférieur 32, supérieur 34 respectivement.

Chaque bride annulaire 20, 22 est une bride annulaire comportant un trou central inférieur 36, supérieur 38 qui, comme la bride 20, 22 et le corps de clapet associé 32, 34 est de contour circulaire.

Le corps de clapet inférieur 32 appartenant au clapet inférieur de dépression 12 repose par gravité sur le siège de clapet 24, 28 et il est susceptible de se soulever lorsqu'une dépression règne dans la chambre interne 40 de la soupape 10.

Le corps de clapet supérieur 34 appartenant au clapet supérieur de surpression 14 est lui aussi susceptible de se soulever en cas de surpression dans la chambre 40, et il est ici taré par l'intermédiaire d'une masse de tarage 42 qui lui est superposée avec interposition de ressorts de compression 44.

La paroi ou jupe latérale cylindrique 18 comporte un trou 46 permettant le raccordement par soudage d'un conduit 48 en vue de relier la soupape 10 à une installation, et par exemple à une cuve (non représentée) contenant un fluide chimique ou à usage alimentaire.

Selon la conception de l'état de la technique représentée à la figure 1, l'assemblage de la soupape 10 comportant un clapet inférieur de surpression 12 du type montant, nécessite des vis ou tirants d'assemblage 50 qui s'étendent axialement selon la direction verticale à l'intérieur de la chambre 40.

Les tirants 50 sont vissés dans les brides inférieure 20 et supérieure 22 et ils assurent ainsi l'assemblage du corps de soupape constitué principalement par les trois composants 18, 20 et 22, par serrage axial des brides.

Comme on peut le voir à la figure 1, les tirants 50 s'étendent également verticalement vers le haut au-dessus de la bride supérieure pour permettre, en partie haute, la fixation et le montage d'un capot 52 qui protège les composants du clapet supérieur de surpression 14.

Les tirants 50 qui s'étendent à l'intérieur de la chambre 40 et en partie haute au-dessus de la bride annulaire supérieure 22 peuvent également constituer des moyens de guidage des déplacements des corps de clapet inférieur 32 et supérieur 34.

Comme cela a été expliqué précédemment, la présence d'éléments d'assemblage tels que les tirants 50 à l'intérieur de la chambre 40 constitue des zones de pollution potentielle de la soupape 10 qu'il est notamment difficile de laver et de nettoyer lors du rinçage de l'installation qui est équipée de la soupape.

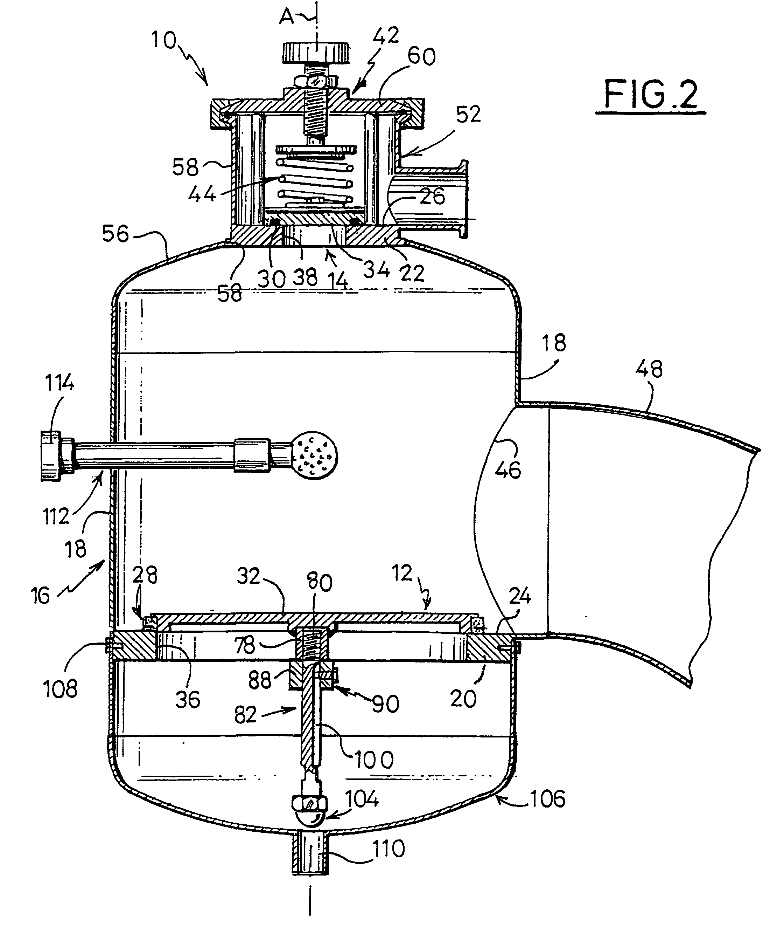

Afin de remédier à ces inconvénients, l'invention propose une soupape analogue conformément au mode de réalisation représenté aux figures 2 et suivantes.

Comme on peut le constater notamment à la figure 2, la conception selon l'invention permet de supprimer les éléments d'assemblage de fixation situés à l'intérieur de la soupape 10, c'est-à-dire à l'intérieur de la chambre interne 40 qui est la zone sensible qui, outre son étanchéité, doit être propre et doit pouvoir être lavée et nettoyée dans les meilleures conditions.

A cet effet, le corps 16 de la soupape 10 est une pièce en tôle d'acier inoxydable chaudronnée et elle est constituée pour l'essentiel par la virole cylindrique 18 qui se prolonge à sa partie supérieure par une paroi supérieure 56 qui est ici de profil légèrement tronconique et qui comporte un trou central axial 58 dans lequel est rapportée, par soudage, une plaque annulaire supérieure 22 appartenant au clapet supérieur de surpression 14.

S'agissant de la conception du clapet extérieur de surpression 14 agencé en partie haute de la soupape, si on la compare à celle de la figure 1, il s'agit ici d'un clapet taré au moyen d'un ensemble à vis qui remplace la masse 42, tandis que ses autres composants sont agencés de la même manière que selon l'état de la technique, et notamment son corps de clapet 34, à l'exception du joint d'étanchéité 30 qui est agencé dans une gorge du corps de clapet afin de simplifier la conception de la plaque 22.

Le capot 52 est ici constitué d'une part par une virole latérale d'axe A qui est soudée à la partie supérieure de la plaque annulaire 22, et d'autre part, par un bouchon supérieur 60 serré par une pince ou "clamp" avec un collier démontable, cette conception permettant l'assemblage des différents composants du clapet de surpression 14 à l'extérieur du corps de soupape 18 sans avoir à recourir à aucun élément qui s'étend à l'intérieur de la chambre 40.

A la partie inférieure de la paroi latérale 18 du corps de soupape 16, la plaque inférieure annulaire 20 est également soudée.

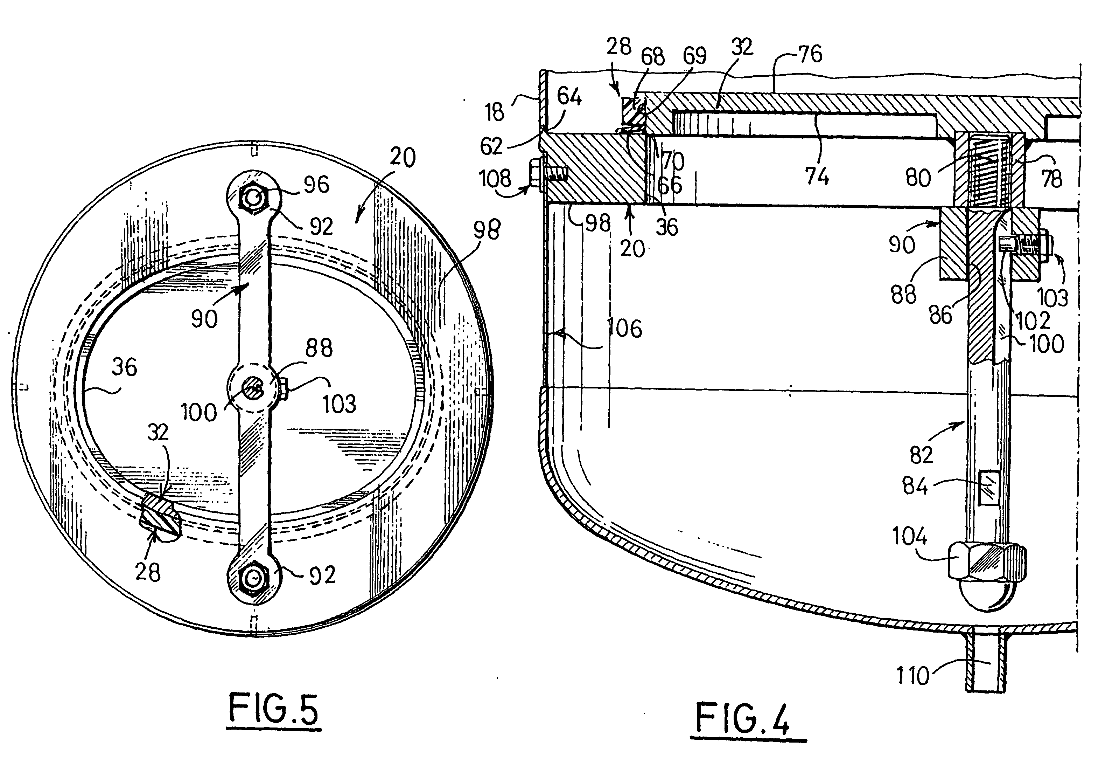

Comme on peut le voir plus particulièrement à la figure 4, la face supérieure horizontale 24 de la plaque 20 comporte, à sa périphérie radialement extérieure, une nervure 62 qui s'étend verticalement vers le haut et sur laquelle est soudé le bord annulaire inférieur 64 de la virole ou paroi latérale 18.

Ainsi, on réalise le corps de soupape (constitué principalement par les trois composants 18, 20 et 22) sous la forme d'une pièce chaudronnée et soudée qui est ensuite indémontable. A cet effet, le conduit coudé 48 est aussi soudé au niveau du trou 46 pour réaliser un ensemble monobloc.

Le clapet inférieur 14 étant du type montant, c'est-à-dire qu'il se soulève en cas de dépression de la chambre 40, il est nécessaire, après avoir fabriqué le corps de soupape 16, de pouvoir mettre le corps de clapet 32, formant bouchon de fermeture, en place à l'intérieur du corps de soupape 16, c'est-à-dire à l'intérieur de la chambre 40.

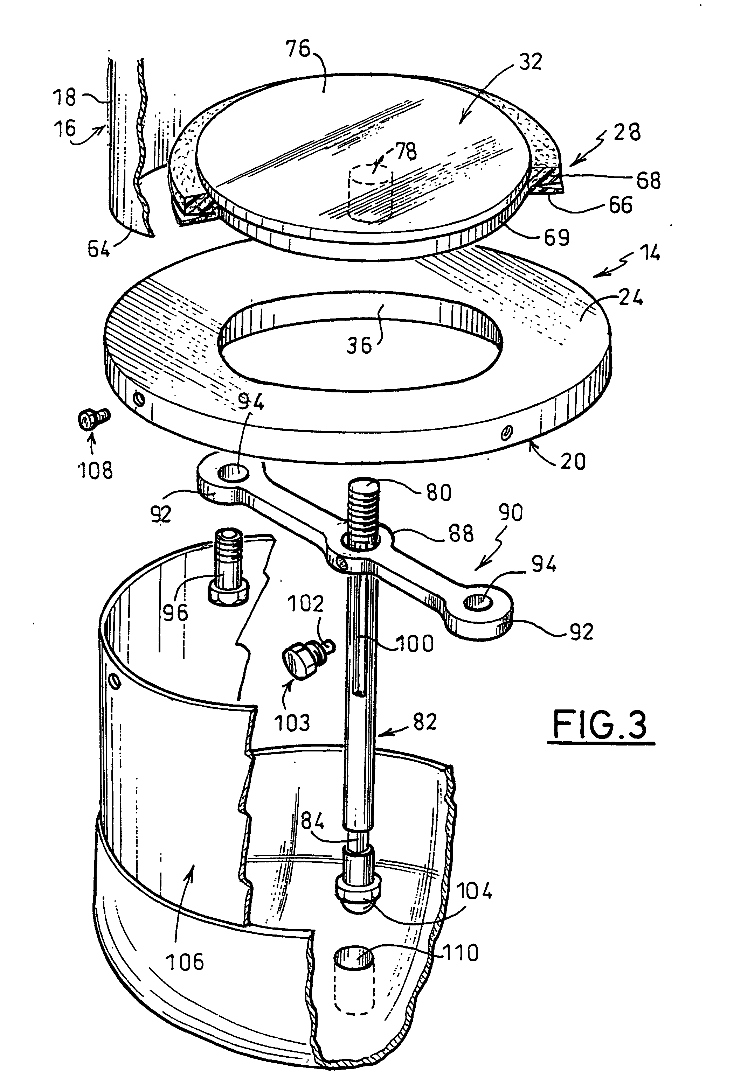

A cet effet, comme on peut le voir notamment aux figures 3 et 5, le corps de clapet 32 présente un contour extérieur de forme ovale ou elliptique de la même manière que le trou central 36 de la plaque annulaire 20 constituant le siège du clapet de dépression.

Grâce à cette forme ovale ou elliptique du corps de clapet 32 et du trou central 36, on comprend (en considérant la figure 5) qu'il est possible d'introduire le corps de clapet 32, verticalement de bas en haut à l'intérieur de la chambre 40 en l'inclinant et en orientant initialement sa plus petite dimension selon la plus grande dimension du trou 36.

Le corps de clapet 32, équipé de son joint d'étanchéité ou joint de clapet 28 peut ainsi être introduit et mis en place à l'intérieur de la chambre 40 pour qu'il vienne reposer verticalement en appui sur la face supérieure 24 de la plaque inférieure 22 qui constitue le siège de clapet proprement dit et qui, à cet effet, est une face polie avec précision pour améliorer l'étanchéité du clapet.

Comme on peut le voir sur la figure 4, le joint de clapet 28 est ici un joint à lèvre périphérique 66 qui est agencée à la partie inférieure du corps de joint 68 et qui prend appui de manière étanche contre la portion en vis-à-vis de la face supérieure 24 de la bride annulaire 20.

Afin de ne pas écraser la lèvre 66 pour conserver au joint 28 toute son efficacité, dans la position de repos ou de fermeture représentée notamment à la figure 4, le corps de clapet 32 prend appui verticalement vers le bas sur une portion en vis-à-vis de la face supérieure annulaire 24 par l'intermédiaire d'une zone d'appui 70 de manière à constituer un appui fixe et précis sans écraser la lèvre 66 sous l'action de la pression dans la cuve.

Le corps de joint 68 est monté à la périphérie radialement extérieure du corps de joint 32 dans une gorge de joint 69 qui est ici ouverte radialement vers l'extérieur et verticalement vers le bas.

En position montée du joint 28, celui ci épouse bien entendu le contour ovale du corps de clapet 62 et de la gorge 69.

Le corps de clapet 32 peut être allégé par exemple en ménageant dans sa face inférieure 72 un lamage annulaire 74.

Par contre, on constate que la face supérieure 76 du corps de clapet 32 est une face supérieure lisse sans aspérités, ni gorge ou rainure, de manière que le corps de clapet 32 ne comporte aucune zone susceptible de contenir des liquides et ceci afin de faciliter le nettoyage de la soupape.

Dans la mesure où le corps de clapet 32 et le trou 36 sont de forme ovale ou elliptique, il est nécessaire d'orienter angulairement le corps de clapet 32 par rapport au siège de clapet 20, 24.

Il est également souhaitable de pouvoir guider les déplacements verticaux du corps de clapet 32 lorsque celui ci se soulève, en cas de dépression dans la chambre 40.

A cet effet, la partie centrale du corps de clapet 32 comporte une douille inférieure axiale 78 qui est taraudée et qui est soudée sous la face inférieure 72 du corps de clapet 32.

La douille 78 reçoit l'extrémité supérieure filetée 80 d'une tige de guidage 82 d'orientation axiale qui est vissée et qui s'étend verticalement vers le bas.

Au voisinage de son extrémité inférieure, la tige 82 qui s'étend entièrement à l'extérieur du corps de soupape, c'est-à-dire en dehors de la chambre 40, comporte des moyens 84 pour son entraînement en rotation en vue du serrage de liaison filetée 78, 80.

Le corps cylindrique de la tige 82 constitue ainsi une tige ou axe pour le guidage vertical du clapet 32 et elle est à cet effet reçue à l'intérieur du perçage axial lisse 86 formé dans une bague axiale de guidage 88.

La bague de guidage 88 est constituée par le tronçon central d'un bras support 90 qui est un bras d'orientation transversale qui s'étend diamétralement et dont chacune des extrémités diamétrales opposées 92 comporte un trou de fixation 94 permettant le passage d'une vis 96 pour la fixation du bras support sous la face inférieure 98 de la bride annulaire inférieure 20 formant siège de clapet.

Ainsi, après avoir introduit le corps de clapet 32 dans la chambre 40, et vissé la tige 82, on introduit par exemple verticalement de bas en haut la tige 82 dans la bague de guidage 88 du bras support 90 et on vient fixer ce dernier par les vis 96 sous la face inférieure 98 dans la bride 20.

De manière à indexer angulairement le corps de clapet 32 par rapport au siège de clapet 20, 24, la tige de guidage 82 comporte une rainure axiale 100 qui reçoit en coulissement vertical l'extrémité libre 102 formant pion d'indexation, qui appartient à une vis d'orientation transversale 104 qui est montée vissée dans le corps de la bague de guidage 88.

Ainsi, dans la mesure où la tige 82 est liée en rotation au corps de clapet 32, et dans la mesure où la bague de guidage 88 est fixe par rapport à la plaque annulaire 20, le clapet 32 est indexé angulairement par rapport au siège de clapet 20, 24.

L'extrémité libre inférieure de la tige 82 comporte enfin une vis 104 formant "bouchon" pour éviter que le bras 90 ne tombe lors du démontage du clapet.

Dans le mode de réalisation illustré aux figures 2 et suivantes, la soupape 10 comporte une cuvette inférieure 106 de récupération des écoulements, notamment lors des opérations de lavage et de rinçage, qui est une pièce en tôle chaudronnée rapportée sur la bride 20 à laquelle elle est fixée par une série de quatre vis 108 répartie angulairement de manière régulière, la cuvette 106 comportant un orifice inférieur 110 d'évacuation.

Cette pièce constitue aussi un filtre anti-insectes qui évite la pénétration des insectes en phase d'aspiration de la soupape, la virole 106 étant à cet effet une virole en tôle perforée de trous d'environ 1 mm de diamètre.

Dans le mode de réalisation illustré à la figure 2, de manière connue, on voit que la soupape 10 est aussi équipée d'une buse ou boule 112 pour le lavage et le rinçage de la chambre 40 et de toutes les parois internes du corps de soupape par projection et aspersion, l'extrémité externe 114 de la buse 112 pouvant être reliée, de manière connue, à une source de liquide de lavage.

L'agencement du joint de clapet de dépression qui est porté par le corps de clapet selon le mode de réalisation qui vient d'être décrit est particulièrement avantageux dans la mesure où la face supérieure 24 de la plaque annulaire 20 formant siège de clapet est dépourvue de toute rainure ou gorge susceptible de retenir des écoulements.

Cette conception du joint porté par le corps de clapet peut bien entendu s'appliquer également à la conception du clapet supérieur de surpression 14.

L'invention n'est pas limitée au mode de réalisation qui vient d'être décrit.

Elle trouve notamment à s'appliquer pour une simple soupape à dépression, c'est-à-dire une soupape dans laquelle la paroi supérieure chaudronnée du corps de soupape est entièrement fermée en une seule pièce.

Il est bien entendu possible de prévoir des accessoires connus pour équiper la soupape tels que des moyens de détection de l'ouverture du clapet de dépression dans le cas où la soupape doit équiper une cuve stérile.

Il est aussi possible de prévoir des cartouches chauffantes avec un boîtier de contrôle et une sonde de température, ainsi qu'un vérin de décollage du clapet de dépression.

## Revendications

1. Soupape de sécurité (10) pour une cuve destinée à contenir un fluide chimique ou alimentaire afin notamment de réaliser un dispositif de protection automatique au vide en cas de vidange d'une cuve étanche, éventuellement en combinaison avec un dispositif de protection automatique à la surpression lors du remplissage de la cuve, du type comportant un corps de soupape (16) comportant une paroi latérale (18) en forme de jupe globalement cylindrique d'axe vertical (A) qui est fermée à sa partie supérieure et à la partie inférieure (20) de laquelle est agencée une plaque annulaire horizontale inférieure (20) trouée centralement (36) et qui s'étend radialement vers l'intérieur du corps de soupape et dont la face supérieure (24) délimite un siège annulaire de clapet avec lequel coopère la face annulaire inférieure en vis-à-vis d'un corps mobile de clapet (32) en forme générale de plaque de fermeture du trou central (36) qui repose par gravité sur le siège de clapet (24) et qui est susceptible de se soulever automatiquement lorsque la pression à l'intérieur (40) du corps de soupape est inférieure à une valeur déterminée pour constituer un clapet de dépression (12),
**caractérisée en ce que** la plaque annulaire (20) forme un ensemble monobloc avec la jupe latérale (18) du corps de soupape (16), et **en ce que** le trou central (36) de la plaque annulaire et le corps de clapet (32) sont de forme générale ovale ou elliptique afin de permettre l'introduction du corps de clapet (32) de bas en haut à travers le trou central (36) en vue de sa mise en place lors de l'assemblage de la soupape (10).

2. Soupape de sécurité selon la revendication précédente, **caractérisée en ce que** la plaque annulaire (20) formant siège de clapet est soudée au bord d'extrémité inférieure (64) de la jupe annulaire (18) du corps de soupape (16).

3. Soupape selon l'une quelconque des revendications précédentes, **caractérisée en ce que** ladite face supérieure (24) de la plaque annulaire formant siège de clapet (20) est une surface lisse sur laquelle vient porter un joint périphérique d'étanchéité (28) porté par le corps de clapet (32).

4. Soupape selon la revendication précédente, **caractérisée en ce que** le corps de clapet (32) comporte une gorge périphérique (69) qui est ouverte radialement vers l'extérieur et verticalement vers le bas et qui reçoit le joint périphérique d'étanchéité (28, 68).

5. Soupape selon l'une quelconque des revendications 3 ou 4, **caractérisée en ce que** la face inférieure (72) du corps de clapet (32) comporte une zone périphérique annulaire inférieure (70) d'appui du corps de clapet sur le siège (24), et **en ce que** le joint d'étanchéité (28, 68) comporte une lèvre inférieure d'étanchéité (66) qui porte sur le siège de clapet (24) lorsque ladite zone (70) est en appui.

6. Soupape selon l'une quelconque des revendications précédentes, **caractérisée en ce que** le clapet comporte une tige centrale et axiale (82) de guidage des déplacements verticaux du corps de clapet (32) par rapport au siège de clapet (24), qui s'étend verticalement vers le bas et qui est reçue en coulissement axial dans une bague (88) de guidage portée par la plaque annulaire (20) formant siège de clapet.

7. Soupape selon la revendication précédente, **caractérisée en ce qu'**elle comporte un bras inférieur transversal (90) de guidage du corps de clapet (32) qui s'étend diamétralement et dont les deux extrémités opposées (92) s'étendent chacune en regard d'une partie en vis-à-vis de la face inférieure (98) de la plaque annulaire (20) formant siège de clapet à laquelle elle est fixée, et **en ce que** le tronçon central du bras de guidage constitue ladite bague de guidage (88).

8. Soupape selon la revendication précédente, **caractérisée en ce qu'**il est prévu des moyens d'indexation angulaire du corps de clapet (32) par rapport au siège de clapet (20, 24).

9. Soupape selon la revendication précédente prise en combinaison avec l'une des revendications 6 ou 7, **caractérisée en ce que** la tige de guidage (82) est solidaire en rotation du corps de clapet (32), et **en ce qu'**il est prévu des moyens d'indexation (100, 102) angulaire de la tige de guidage (82) par rapport à la bague de guidage (88).

10. Soupape selon l'une quelconque des revendications précédentes, **caractérisée en ce que** la face supérieure (76) du corps de clapet (32) est une surface plane lisse.

11. Soupape selon l'une quelconque des revendications précédentes, **caractérisée en ce que** la partie supérieure du corps de soupape (16) est fermée par une paroi supérieure (56) réalisée en une seule pièce avec la jupe latérale (18).

12. Soupape selon la revendication précédente, **caractérisée en ce que** la paroi supérieure (56) comporte un trou central (38) reliant le corps de soupape (16) à un clapet taré de surpression (14) rapporté à la partie supérieure de la soupape (10) et agencé à l'extérieur du corps (16) de soupape.

13. Soupape selon la revendication précédente, **caractérisée en ce que** le clapet supérieur de surpression (14) comporte une plaque annulaire (22) délimitant un siège de soupape et qui est fixée à la paroi supérieure (56) du corps de soupape (16) par soudage.

14. Soupape selon l'une quelconque des revendications précédentes, **caractérisée en ce qu'**elle comporte un organe (112, 114) de lavage et ou de rinçage de la soupape qui comporte notamment une buse de projection de liquide de lavage et/ou de rinçage qui est agencée centralement à l'intérieur (40) du corps de soupape (32), et/ou un filtre anti-insectes (106).

15. Soupape selon l'une quelconque des revendications précédentes, **caractérisée en ce que** le corps de soupape (16) est une pièce de chaudronnerie, notamment en acier inoxydable.

## Patentansprüche

1. Sicherheitsventil (10) für einen Behälter, der dazu bestimmt ist, eine Flüssigkeit aus dem Bereich der Chemie oder der Nahrungsmittel aufzunehmen, insbesondere, um eine automatische Schutzvorrichtung gegen Vakuum im Fall einer Entleerung eines dicht verschlossenen Behälters herzustellen, gegebenenfalls in Kombination mit einer automatischen Schutzvorrichtung gegen Überdruck bei Füllen des Behälters, der Art, welches einen Ventilkörper (16) aufweist, der eine Seitenwand (18) aufweist in Form einer im wesentlichen zylindrischen Schürze zur senkrechten Achse (A), die in ihren oberen Teil geschlossen ist und in deren unterem Teil (20) eine untere waagerechte ringförmige Scheibe (20) angeordnet ist, die in der Mitte ein Loch (36) aufweist und die sich radial zum Innern des Ventilkörpers erstreckt, und deren Oberseite (24) einen ringförmigen Klappensitz abgrenzt, mit dem die ringförmige Unterseite zusammenwirkt, die gegenüber eines beweglichen Klappenkörpers (32) liegt, der einen im allgemeinen scheibenförmigen Verschluss für das mittige Loch (36) bildet, welcher durch Schwerkraft in dem Klappensitz (24) ruht und welcher in der Lage ist, sich automatisch zu heben, wenn der Druck im Innern (40) des Ventilkörpers geringer ist als ein bestimmter Wert, um eine Unterdruckklappe (12) zu bilden,
**dadurch gekennzeichnet, dass** die ringförmige Scheibe (20) mit der Seitenschürze (18) des Ventilkörpers eine einstückige Einheit bildet, und **dadurch**, dass das mittige Loch (36) der ringförmigen Scheibe und der Klappenkörper (32) eine im allgemeinen ovale oder elliptische Form aufweisen, um das Einführen des Klappenkörpers (32) von unten nach oben durch das mittige Loch (36) im Hinblick auf sein Platzieren beim Zusammenbauen des Ventils (10) zu ermöglichen.

2. Sicherheitsventil gemäß dem vorausgegangenen Anspruch, **dadurch gekennzeichnet, dass** die ringförmige Scheibe (20), welche den Sitz der Klappe bildet, am unteren Außenrand (64) der ringförmigen Schürze (18) des Ventilkörpers (16) angeschweißt ist.

3. Ventil gemäß irgendeinem der vorausgegangenen Ansprüche, **dadurch gekennzeichnet, dass** die Oberseite (24) der ringförmigen Scheibe, welche den Sitz der Klappe (20) bildet, eine glatte Fläche ist, an der eine Ringdichtung (28) zum Aufliegen kommt, die an dem Klappenkörper (32) sitzt.

4. Ventil gemäß dem vorausgegangenen Anspruch, **dadurch gekennzeichnet, dass** der Klappenkörper (32) eine Ringnut (69) aufweist, welche radial nach außen und senkrecht nach unten geöffnet ist und welche die Ringdichtung (28, 68) aufnimmt.

5. Ventil gemäß irgendeinem der Ansprüche 3 oder 4, **dadurch gekennzeichnet, dass** die Unterseite (72) des Klappenkörpers (32) eine untere ringförmige Umfangsstützzone (70) des Klappenkörpers auf dem Sitz (24) aufweist, und **dadurch**, dass die Ringdichtung (28, 68) eine untere Dichtungslippe (66) aufweist, die auf dem Klappensitz (24) aufliegt, wenn die Zone (70) zum Anliegen kommt.

6. Ventil gemäß irgendeinem der vorausgegangenen Ansprüche, **dadurch gekennzeichnet, dass** die Klappe einen mittigen und axialen Führungsstift (82) aufweist für vertikale Verschiebungen des Klappenkörpers (32) in Bezug auf den Klappensitz (24), welcher sich senkrecht nach unten erstreckt und beim axialen Gleiten in einer Führungshülse (88) aufgenommen wird, die auf der ringförmigen Scheibe (20), die den Klappensitz bildet, aufliegt.

7. Ventil gemäß dem vorausgegangenen Anspruch, **dadurch gekennzeichnet, dass** es einen querliegenden unteren Führungsarm (90) des Klappenkörpers (32) aufweist, welcher sich diametral erstreckt und dessen zwei gegenüberliegenden Enden (92) sich jeweils in Hinblick auf einen Abschnitt gegenüber der Unterseite (98) der ringförmigen Scheibe (20) erstrecken, die den Klappensitz bildet, an der sie befestigt ist, und **dadurch**, dass das Mittelstück des Führungsarms die Führungshülse (88) bildet.

8. Ventil gemäß dem vorausgegangenen Anspruch, **dadurch gekennzeichnet, dass** ringförmige Indexierungsmittel des Klappenkörpers (32) in Verhältnis zum Sitz der Klappe (20, 24) vorgesehen sind.

9. Ventil gemäß dem vorausgegangenen Anspruch zusammen mit einem der Ansprüche 6 oder 7, **dadurch gekennzeichnet, dass** der Führungsstift (82) in Rotation mit dem Klappenkörper (32) aus einem Stück ist, und **dadurch**, dass ringförmige Indexierungsmittel (100, 102) des Führungsstifts (82) im Verhältnis zur Führungshülse (88) vorgesehen sind.

10. Ventil gemäss irgendeinem der vorausgegangenen Ansprüche, **dadurch gekennzeichnet, dass** die Oberseite (76) des Klappenkörpers (32) eine flache ebene Fläche ist.

11. Ventil gemäß irgendeinem der vorausgegangenen Ansprüche, **dadurch gekennzeichnet, dass** der obere Teil des Ventilkörpers (16) durch eine obere Wand (56) geschlossen ist, die in einem Stück mit der Seitenschürze (18) hergestellt ist.

12. Ventil gemäß dem vorausgegangenen Anspruch, **dadurch gekennzeichnet, dass** die obere Wand (56) ein mittiges Loch (38) aufweist, welches den Ventilkörper (16) mit einer geeichten Überdruckklappe (14) verbindet, die an den oberen Teil des Ventils (10) angesetzt ist und an der Außenseite des Ventilkörpers (16) angeordnet ist.

13. Ventil gemäß dem vorausgegangenen Anspruch, **dadurch gekennzeichnet, dass** die obere Überdruckklappe (14) eine ringförmige Scheibe (22) aufweist, die einen Klappensitz abgrenzt und die an der oberen Wand (56) des Ventilkörpers (16) durch Schweißen befestigt ist.

14. Ventil gemäß irgendeinem der vorausgegangenen Ansprüche, **dadurch gekennzeichnet, dass** es ein Mittel (112, 114) zum Waschen oder Spülen des Ventils aufweist, welches insbesondere eine Strahldüse für Flüssigkeit zum Waschen und/oder Spülen aufweist, die mittig im Innern (40) des Ventilkörpers (32) angeordnet ist, sowie einen Insektenfilter (106).

15. Ventil gemäß irgendeinem der vorausgegangenen Ansprüche, **dadurch gekennzeichnet, dass** der Ventilkörper (16) ein Element des Kesselbaus ist, insbesondere aus rostfreiem Stahl.

## Claims

1. Safety valve (10) for a container intended to contain a chemical or edible fluid, in order, in particular, to produce a device for automatic vacuum protection in the event of a sealed container being drained, optionally in combination with a device for automatic excess pressure protection during filling of the container, of the type comprising a valve body (16) comprising a lateral wall (18) in the form of a generally cylindrical skirt having a vertical axis (A), which skirt is closed in its upper portion, and on the lower portion (20) of which is arranged a lower horizontal annular plate (20), which has a central hole (36), which extends radially toward the inside of the valve body and the upper face (24) of which delimits an annular check mechanism seat with which there cooperates the lower opposing annular face of a movable check mechanism body (32) in the general form of a plate for closing the central hole (36), which rests by gravity on the check mechanism seat (24) and which is capable of being automatically lifted when the pressure in the interior (40) of the valve body is less than a predetermined value for forming a pressure reducing check mechanism (12), **characterised in that** the annular plate (20) forms a one-piece unit with the lateral skirt (18) of the valve body (16), and **in that** the central hole (36) of the annular plate and the check mechanism body (32) are generally oval or elliptical in shape in order to allow the upward introduction of the check mechanism body (32) through the central hole (36), in order to allow it to be fitted during the assembly of the valve (10).

2. Safety valve according to the preceding claim, **characterised in that** the annular plate (20) forming the check mechanism seat is welded to the lower end edge (64) of the annular skirt (18) of the check mechanism body (16).

3. Valve according to any one of the preceding claims, **characterised in that** said upper face (24) of the annular plate forming the check mechanism seat (20) is a smooth surface on which a peripheral seal (28) held by the check mechanism body (32) comes to bear.

4. Valve according to the preceding claim, **characterised in that** the check mechanism body (32) comprises a peripheral throat (69), which is open radially toward the outside and vertically toward the bottom and which receives the peripheral seal (26, 68).

5. Valve according to either claim 3 or claim 4, **characterised in that** the lower face (72) of the check mechanism body (32) comprises a lower annular peripheral zone (70) for supporting the check mechanism body on the seat (24), and **in that** the seal (28, 68) comprises a lower lip seal (66), which bears on the check mechanism seat (24) when said zone (70) is supported.

6. Valve according to any one of the preceding claims, **characterised in that** the check mechanism comprises a central axial rod (82) for guiding the vertical displacements of the check mechanism body (32) relative to the check mechanism seat (24), which rod extends vertically downward and is received so as to slide axially in a guide ring (88) held by the annular plate (20) forming the check mechanism seat.

7. Valve according to the preceding claim, **characterised in that** it comprises a lower transverse arm (90) for guiding the check mechanism body (32), which arm extends diametrically and the two opposing ends (92) of which each extend opposite a portion opposing the lower face (98) of the annular plate (20) forming the check mechanism seat to which said check mechanism is fixed, and **in that** the central segment of the guide arm forms said guide ring (88).

8. Valve according to the preceding claim, **characterised in that** means for indexing the angle of the check mechanism body (32) relative to the check mechanism seat (20, 24) are provided.

9. Valve according to the preceding claim taken in combination with either claim 6 or claim 7, **characterised in that** the guiding rod (82) is integral in rotation with the check mechanism body (32), and **in that** means (100, 102) for indexing the angle of the guiding rod (82) relative to the guiding ring (88) are provided.

10. Valve according to any one of the preceding claims, **characterised in that** the upper face (76) of the check mechanism body (32) is a smooth plane surface.

11. Valve according to any one of the preceding claims, **characterised in that** the upper portion of the valve body (16) is closed by an upper wall (56) formed in a single piece with the lateral skirt (18).

12. Valve according to the preceding claim, **characterised in that** the upper wall (56) comprises a central hole (38) connecting the valve body (16) to a calibrated excess pressure check mechanism (14) attached to the upper portion of the valve (10) and configured on the outside of the valve body (16).

13. Valve according to the preceding claim, **characterised in that** the upper excess pressure valve (14) comprises an annular plate (22) that delimits a valve seat and is fixed by welding to the upper wall (56) of the valve body (16).

14. Valve according to any one of the preceding claims, **characterised in that** it comprises a member (112, 114) for washing and/or rinsing the valve, which member comprises, in particular, a nozzle for spraying washing and/or rinsing liquid that is arranged centrally in the interior (40) of the valve body (32), and/or an antiinsect filter (106).

15. Valve according to any one of the preceding claims, **characterised in that** the valve body (16) is a boiler-making part made, in particular, of stainless steel.
